# EUROPEAN PATENT SPECIFICATION

(11) **EP 1 522 526 B1**
(45) Date of publication and mention of the grant of the patent: **19.11.2008**
(21) Application number: 04021711.9
(22) Date of filing: 13.09.2004
(51) Int. Cl.: C02F 1/461, C02F 1/467, C25B 11/04

(54) **Method for electrolytically treating chemical plating waste liquor**
Verfahren zur elektrolytischen Behandlung von chemischen Beschichtungslaugen
Procédé de traitement électrolytique des liquides résiduaires de dépôt chimique

(30) Priority: 01.10.2003 JP 2003343545
(43) Date of publication of application: 13.04.2005
(73) Proprietor: PERMELEC ELECTRODE LTD., Fujisawa-shi, Kanagawa 252-0816 (JP)
(72) Inventor: Furuta, Tsuneto, c/o Permelec Electrode LTD., Fujisawa-shi, Kanagawa 252-0816 (JP); Sekimoto, Masao, c/o Permelec Electrode LTD., Fujisawa-shi, Kanagawa 252-0816 (JP); Wakita, Shuhei, c/o Permelec Electrode LTD., Fujisawa-shi, Kanagawa 252-0816 (JP); Tanaka, Hozumi, c/o Permelec Electrode LTD., Fujisawa-shi, Kanagawa 252-0816 (JP)
(74) Representative: Grünecker, Kinkeldey, Stockmair & Schwanhäusser Anwaltssozietät

(56) References cited:
- EP-A- 1 369 384
- US-B1- 6 375 827
- US-B1- 6 533 916

## Description

### FIELD OF THE INVENTION

The present invention relates to a method for electrolytically treating a chemical plating waste liquor, for efficiently oxidizing hypophosphorous acid and phosphorous acid contained in the chemical plating waste liquor into orthophosphoric acid and simultaneously oxidation-decomposing organic compounds contained in the chemical plating waste liquor.

### BACKGROUND ART

Chemical plating for reducing and depositing metal ions using a reducing agent such as hydrazine, hydridoboric acid or hypophosphorous acid is utilized as metal plating to insulating materials in the manufacture of electronic parts, precision parts, ornaments, and the like. Above all, chemical plating using hypophosphorous acid as a reducing agent is widely used on an industrial scale.

A chemical plating bath using hypophosphorous acid as a reducing agent contains a metal ion as a metal source for plating, hypophosphorous acid as a reducing agent, and additives for the purpose of stabilizing the plating bath or enhancing the quality of a plated film. It is general to use organic compounds including malic acid and citric acid as the additives.

In the chemical plating bath using this hypophosphorous acid as a reducing agent, the metal ions are reduced with hypophosphorous acid, and as a result, a metal plated film and phosphorous acid as an oxidant of hypophosphorous acid are formed. For this reason, due to continuation of the plating operation, the metal ion concentration and the hypophosphorous acid concentration in the plating bath lower, and the phosphorous acid concentration rises. If the phosphorous acid concentration rises, the quality of the plated film deteriorates, and if the phosphorous acid concentration further rises, self-decomposition of the plating bath takes place. Accordingly, in order to manage the plating bath, it is necessary to periodically replenish metal ions and hypophosphorous acid and to remove phosphorous acid. However, since it is impossible to selectively remove only phosphorous acid from the plating bath, it is necessary to periodically discharge a part or the whole of the plating bath.

The thus periodically discharged plating waste liquor contains the above-described metal ions, hypophosphorous acid, phosphorous acid and organic compounds. Therefore, in order to discharge the plating waste liquor into rivers, it is necessary to remove all of these materials from the standpoints of metal contamination, phosphorus contamination and organic compound contamination.

In the present circumstances, the removal of the metal components, phosphorus components and organic material components is carried out successively by individual methods for the respective components, for example, by first reducing the metal ions into metals and precipitating and removing the metals as metal powders, next precipitating and removing the phosphorus components as a calcium salt, and finally subjecting the organic material components to oxidative decomposition treatment. Thus, the operation is very complicated.

Since the metal ions can be removed as metal precipitates by adding a trace amount of a metal catalyst such as metallic palladium to the bath to promote the reaction with hypophosphorous acid contained in the bath, the removal thereof is easy.

On the other hand, for precipitating and removing the phosphorus components such as hypophosphorous acid and phosphorous acid, which are originally contained in the plating bath, it is desired that the phosphorus components can be converted into a salt having a small solubility. However, in fact, the phosphorus components cannot be converted into a salt having a small solubility, and it is necessary that the phosphorus components are once oxidized into orthophosphoric acid and then precipitated as a calcium salt of orthophosphoric acid. Thus, the operation is complicated. The above oxidation reaction proceeds by adding hypochlorous acid, hydrogen peroxide, etc., as an oxidizing agent. However, in fact, the efficiency of this oxidation reaction is low, and the oxidizing agent must be added in a large amount as compared with the stoichiometric amount. For this reason, an economical problem that a large amount of the oxidizing agent must be added and an operational problem that the remaining oxidizing agent must be subjected to neutralization treatment remain.

Further, there is a problem that the amount of waste water increases by the addition of the oxidizing agent and the neutralization of the remaining oxidizing agent.

The organic compound components are finally removed by oxidative decomposition after removing the metal components and the phosphorus components. However, malic acid and citric acid contained in the bath cannot be sufficiently decomposed by hypochlorous acid or hydrogen peroxide as used for oxidizing hypophosphorous acid and phosphorous acid into orthophosphoric acid. Accordingly, there is no practically useful oxidation method other than combustion and biological treatment. Although the combustion is an easy method, it is not a preferred method from the standpoints of protection of the atmospheric environment and generation of combustion ashes. Although the biological treatment is an excellent method from the standpoint of protection of the global environment, it requires a large area for establishing facilities and requires a complicated operation such as biological maintenance and management.

In such a treatment of a chemical plating waste liquor, for the purposes of overcoming defects involved in utilizing an oxidizing agent, improving the operability and economy and reducing a critical point of the increase of a waste liquor amount, JP-B-63-80897 proposes a method of electrolytically oxidizing phosphorous acid into orthophosphoric acid using a platinum electrode or a platinum-plated titanium electrode by a pulse electrolysis method. JP-A-6-99178 proposes a method of electrolytically oxidizing hypophosphorous acid and phosphorous acid into orthophosphoric acid using a lead dioxide electrode by a constant-current electrolysis method.

However, in the method described in JP-B-63-80897, although phosphorous acid can be electrolytically oxidized into orthophosphoric acid, the waste liquor contains a lot of organic compounds such as malic acid and citric acid. Accordingly, the platinum was consumed by the action of these organic compounds, the durability of the electrode was not sufficient, and therefore, a sufficient economic effect was not obtained. JP-A-6-99178 clarifies that hypophosphorous acid and phosphorous acid can be electrolytically oxidized into orthophosphoric acid in a yield close to 100%. However, the organic compounds such as malic acid and citric acid are not sufficiently decomposed, and therefore, after removing the phosphorus components, the organic compounds are decomposed by combustion or biological treatment.

The intermediate document EP-A-1 369 384 describes a process for electrolytically treating industrial and household waste water using a diamond electrode as anode, said process involving adding at least one oxoacid to the liquid to be treated unless it does not contain one already, electrochemically synthesizing at least one peracid from the oxoacid, and oxidatively decomposing organic compounds in the waste water with the peracid.

### SUMMARY OF THE INVENTION

The present invention has been made in view of the above-described problems of the related art technologies.

Accordingly, an object of the present invention is to provide a method for electrolytically treating a chemical plating waste liquor, which are capable of conducting conversion of hypophosphorous acid and phosphorous acid as phosphorus components into orthophosphoric acid and oxidation-decomposition of organic compounds by a substantially single operation.

The present invention provides a method for electrolytically treating a chemical plating waste liquor containing hypophosphorous acid, phosphorous acid and organic compounds contained in an electrolytic cell, which comprises using at least a conductive diamond electrode as an anode and applying an electric current to the conductive diamond electrode, thereby simultaneously performing electrolytic oxidation of hypophosphorous acid and phosphorous acid into orthophosphoric acid and oxidative decomposition of the organic compounds.

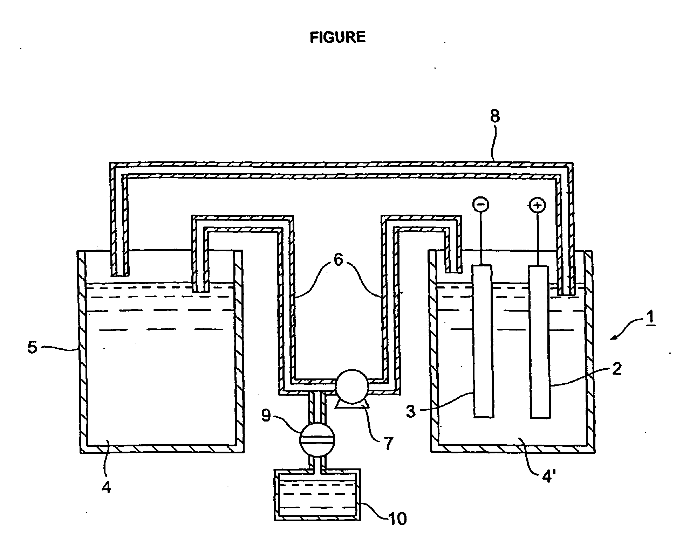

### BRIEF DESCRIPTION OF THE DRAWING

The Figure is a schematic view showing one embodiment of an electrolytic treatment apparatus of a chemical plating waste liquor according to the present invention.

In the drawing:
- 1:: Electrolytic cell
- 2:: Anode
- 3:: Cathode
- 4, 4':: Chemical plating waste liquor
- 5:: Storage tank
- 6:: Feed line
- 7:: Circulating pump
- 8:: Circulation line
- 9:: Valve
- 10:: Oxidizing agent solution vessel

The present invention is described in detail below.

In the case of electrolytic treatment of an aqueous solution such as a chemical plating waste liquor that is the objective to be treated in the present invention, when the above-described conventional platinum electrode or lead dioxide electrode is used as an anode, oxygen generation reaction easily proceeds at the anode. Thus, the electrolytic reaction that is aimed in the present invention, inclusive of oxidation of hypophosphorous acid and phosphorous acid into orthophosphoric and oxidative decomposition of organic compounds, does not proceed, or even when it proceeds, a large energy loss involves. Accordingly, it can be estimated that if the oxygen generation reaction at the anode can be suppressed, the electrolytic reaction that is aimed in the present invention becomes to easily proceed instead of the oxygen generation reaction. In order to achieve this, it is effective to make the oxygen generation reaction proceed hardly by using an electrode having a high oxygen overvoltage.

As a result of extensive and intensive investigations, it has been found that by choosing a conductive diamond electrode as the electrode having a high oxygen overvoltage and performing electrolysis using at least this conductive diamond electrode as an anode, hypophosphorous acid and phosphorous acid contained in the chemical waste liquor can be oxidized into orthophosphoric acid in a high yield, and at the same time, organic compounds such as malic acid and citric acid can be efficiently subjected to oxidative decomposition, leading to accomplishment of the present invention.

Diamond is excellent with respective to heat conductivity, optical permeability, high-temperature durability and oxidation durability. In particular, since it is possible to control electric conductivity by doping, diamond is promising as the next generation and special semiconductor device or an energy conversion element.

When conductive diamond having such a property that good electric conductivity can be imparted by doping in addition to excellent mechanical and chemical stability is used as an electrode, especially an anode, because of its high oxygen generation overvoltage, where (1) oxygen generation reaction, (2) oxidation reaction of hypophosphorous acid and phosphorous acid into orthophosphoric acid, and (3) oxidative decomposition reaction of organic compounds become a competitive reaction, the latter two reactions of oxidation reaction and oxidative decomposition reaction are liable to proceed. Further, the phosphorus components having been converted into orthophosphoric acid can be easily separated as sparingly soluble salts such as a calcium salt.

Accordingly, in electrolytic treatment of a chemical plating waste liquor containing hypophosphorous acid, phosphorus acid and organic compounds, when a conductive diamond electrode is at least used as an anode, the oxygen generation reaction is suppressed to the maximum extent so that the phosphorus components and organic compounds can be removed from the chemical plating waste liquor.

The conductive diamond electrode used in the present invention is, for example, produced by supporting diamond, which is a deposited substance resulting from reduction of an organic material, as a carbon source on an electrode substrate. With respect to the material quality and shape of the substrate, there are no particular limitations so far as it is conductive. For example, plate-shaped materials, mesh-shaped materials, rod-shaped materials, pipe-shaped materials, sphere-shaped materials (for example, beads), or perforated plate-shaped materials as a chatter fibrous sintered body, made of conductive silicon (for example, mono-crystalline, polycrystalline, or amorphous silicon), silicon carbide, titanium, niobium, tantalum, carbon, nickel, etc.

The production process of such a conductive diamond electrode used in the present invention is not particularly limited. Representative examples of the production process include the hot filament-assisted CVD (chemical vapor deposition) process, the microwave plasma CVD process, the plasma arc jet process, and the physical vapor deposition (PVD) process. In any of these processes, a mixed gas of a hydrogen gas and a carbon source is used as the diamond raw material. In order to impart conductivity to diamond, a trace amount of an element having a different valency, such as boron, phosphorus or nitrogen, is added. The addition amount is preferably 1-100,000 ppm, and more preferably 100-10,000 ppm.

As other electrodes, electrodes prepared by supporting a synthetic diamond powder produced from a carbon powder as the raw material under ultra-high pressure or together with a binder such as resins on the support can be used.

In view of electrode durability (protection of the substrate), manufacturing costs, and the like, the thickness of the conductive diamond layer is preferably 0.1-100 µm, and more preferably 1-10 µm.

The conductive diamond electrode can be, for example, produced in the following manner.

A mixed gas comprising raw materials containing an organic compound as a carbon source and further hydrogen, boron (or nitrogen), and the like is activated under a pressure of 1-100 kPa on a hot filament heated at 1,800-2,600°C to generate a carbon radical and a hydrogen radical. In this regard, it is desired that a volume ratio of hydrogen to the carbon gas raw material is controlled at about 0.05/1 to 1/1.

Methane can be used as the carbon source, and diborane can be used as the boron source. Besides, alcohols and boron oxide can also be used, respectively. The latter is preferable from the standpoint of safety on the manufacturing spot. The doping amount of boron or the like is about 100-10,000 ppm, and its resistivity decreases substantially in inverse proportion to the doping amount and is about 10-0.01 Ωm.

When the substrate temperature is maintained at about 600-900°C, deposition of a carbon radical on the substrate surface is initiated. At this time, since the non-diamond components are etched with a hydrogen radical, only the diamond layer substantially grows, whereby the conductive diamond electrode is produced. The deposition rate is usually 0.1-5 µm/H.

With respect to materials of a cathode used in the present invention, there are no particular limitations, but stainless steel is preferable from the standpoints of corrosion resistance and economy. Where a waste liquor from which metal ions have been removed in advance is treated, hydrogen generation reaction due to discharge of water mainly takes place at the cathode. Where a waste liquor is treated without removing metal ions in advance, hydrogen generation reaction and deposition of metals due to discharge of metal ions take place at the cathode. Accordingly, besides the above formation of orthophosphoric acid and oxidative decomposition of organic compounds at the anode, it is possible to recover and remove the metal ions at the same time at the cathode. In the latter case, it is desired to use a cathode having a material quality the same as the metal to be recovered.

With respect to the electrolytic cell that can be used, its structure may be properly determined depending upon the nature of a waste liquor objective to the treatment and the treatment purpose, inclusive of electrolytic cells of a filter press type and electrolytic cells of a box type (or a tub type) whose upper portion is opened. For example, where metal ions are simultaneously recovered and removed at the cathode, electrolytic cells of an opened box type having such a structure that the cathode is easily taken out therefrom are preferable. Where a waste liquor from which metal ions have been removed in advance is treated at high current density, it is preferred to use electrolytic cells of a filter press type in which a large flow rate is obtained.

The electrolytic cell may be either a diaphragm type or a non-diaphragm type. When a diaphragm is used, oxidized orthophosphoric acid is never again reduced into hypophosphorous acid and phosphorous acid.

As materials of the electrolytic cell, glass lining materials, carbon, and titanium, stainless steel and PTFE resins each having excellent corrosion resistance can be preferably used from the standpoints of durability against the electrolytic solution and stability.

For example, the electrolysis conditions of the present invention using the conductive diamond electrode are as follows.

In the case of simultaneously carrying out the oxidation of phosphorus components and the oxidative decomposition of organic compounds, the current density at the anode is 5-20 A/dm², and preferably 5-10 A/dm²; the liquid temperature is from the ambient temperature to 80°C, and preferably 40-60°C; and the pH of the waste liquor is 3-10, and preferably 7-9. Since the kinds and concentrations of the hypophosphorous acid, phosphorous acid and organic compounds contained in the waste liquor are not constant, it is desired to properly set up the treatment conditions within the above ranges depending upon the kinds and concentrations of the component species in the waste liquor.

Where an oxidation ability at the time of electrolytic treatment is low, an oxidizing agent such as inorganic acids may be added in the chemical plating waste liquor objective to the treatment.

The chemical plating waste liquor usually contains heavy metal ions in addition to the phosphorus components and organic compound objective to the treatment of the present invention. When this chemical plating waste liquor is subjected to electrolytic treatment in the treatment system of a chemical plating waste liquor according to the present invention, which has at least a conductive diamond electrode as an anode, the heavy metal ions are deposited on the surface of the cathode and removed from the waste liquor, and the organic compounds are decomposed into carbon dioxide, water, and nitrogen oxide, etc., and removed from the waste liquor. Although hypophosphorous acid and phosphorous acid are converted into orthophosphoric acid and dissolved in the waste liquor, when a calcium ion is added to this waste liquor, the phosphorus components are precipitated as sparingly soluble calcium phosphate and removed from the waste liquor by means of filtration or the like. The amount of impurities in the thus processed waste liquor is reduced to a level at which the waste liquor can be discharged.

In this way, when the present invention is employed, the amount of impurities in the chemical plating waste liquor can be reduced to a level at which the waste liquor can be discharged through a two-stage step of the electrolytic treatment by the conductive diamond anode and the addition of a calcium ion. Accordingly, the chemical plating waste liquor can be simply processed without increasing the amount of the waste liquor. The deposition of metal ions may be carried out in advance. In this case, although the treatment is a three-stage step, it is possible to carry out the treatment of the chemical plating waste liquor more simply and surely as compared with the conventional technologies.

The present invention employs an electrolytic treatment apparatus of a chemical plating waste liquor containing hypophosphorous acid, phosphorous acid and organic compounds, which comprises having at least a conductive diamond electrode as an anode, and concerns an electrolytic treatment method using this apparatus.

Since the conductive diamond electrode has a high oxygen generation overvoltage, when a chemical plating waste liquor containing hypophosphorous acid, phosphorous acid and organic compounds is subjected to electrolysis using at least this electrode as an anode, oxidation of hypophosphorous acid and phosphorous acid into orthophosphoric acid and oxidative decomposition of the organic compounds take place preferentially to the oxygen generation reaction on the surface of the anode.

According to the conventional electrolytic treatment of a chemical plating waste liquor, a defect was encountered such that since a lead dioxide electrode or a platinum electrode is used as an anode, oxidation of phosphorus components into orthophosphoric acid can be carried out with a relatively high current efficiency, but the current efficiency of oxidative decomposition of organic compounds occurring simultaneously is very low.

However, when the chemical plating waste liquor is subjected to electrolytic treatment using a conductive diamond anode according to the present invention, it becomes possible to carry out oxidative decomposition of the organic compounds, which has hitherto proceeded with only a low current efficiency by using the conductive diamond electrode, with a high current efficiency and to carry out oxidation of the phosphorus components into orthophosphoric acid and the oxidative decomposition of the organic compounds substantially simultaneously and in a high yield.

The embodiment of the electrolytic treatment of a chemical plating waste liquor according to the present invention will be described below with reference to the accompanying drawing.

The Figure is a schematic view showing one embodiment of an electrolytic treatment apparatus of a chemical plating waste liquor according to the present invention.

A non-diaphragm type electrolytic cell 1 of a box type (tub type) contains a plate-like anode 2 comprising a substrate (such as titanium) having conductive diamond coated thereon and a plate-like stainless steel-made cathode 3. A storage tank 5 storing a chemical plating waste liquor 4 containing phosphorus components such as hypophosphorous acid and phosphorous acid and organic compounds such as malic acid and citric acid is placed outside this electrolytic cell 1.

The chemical plating waste liquor 4 in this storage tank 5 is introduced into the electrolytic cell 1 by a circulating pump 7 placed on a feed line 6. The phosphorus components in the introduced chemical plating waste liquor 4' are oxidized on the surface of the conductive diamond anode 2 and converted into orthophosphoric acid, which is then precipitated and removed as a sparingly soluble salt such as calcium phosphate. Further, since the conductive diamond anode 2 has a high oxygen overvoltage, oxygen generation reaction hardly occurs. In proportion thereto, malic acid, citric acid, and so on in the chemical plating waste liquor 4' are subjected to oxidative decomposition and removed as carbon dioxide and water from the chemical plating waste liquor 4'. Oxygen generation reaction proceeds due to discharge of water at the anode 2.

On the other hand, at the cathode 3, hydrogen generation proceeds mainly due to discharge reaction of water, and reduction of a part of the organic compounds proceeds.

When a chlorine ion and a sulfuric acid ion are present in the chemical plating waste liquor, hypochlorous acid and peroxosulfuric acid are formed due to discharge of these ionic species. These acids, hydrogen peroxide, ozone, and so on are an oxidizing agent and promote oxidation of the phosphorus components and anodic oxidation of the organic compound components.

The chemical plating waste liquor 4' in which the concentrations of the phosphorus components such as hypophosphorous acid and phosphorous acid and the organic compound components have been reduced by the anodic oxidation in the electrolytic cell 1 is returned into the storage tank 5 through a circulation line 8. When the oxidizing agent such as hypochlorous acid remains in the chemical plating waste liquor 4 returned into the storage tank 5, oxidation of the phosphorus components and organic compound components may possibly proceed within the tank 5.

Where the concentration of the phosphorus components and the concentration of the organic compound components of the chemical plating waste liquor 4 returned into the storage tank 5 exceed the value at which the chemical plating waste liquor 4 can be discharged, the chemical plating waste liquor 4 is again fed into the electrolytic cell 1 from the feed line 6, thereby subjecting the phosphorus components or organic compound components to anodic oxidation or oxidative decomposition, respectively.

Where oxidation of the phosphorus components and organic component components is insufficient only by the anodic oxidation in the electrolytic cell 1, for example, the efficiency of the anodic oxidation in the electrolytic cell 1 may be enhanced by connecting an oxidizing agent solution vessel 10 to the feed line 6 via a valve 9 and adding this oxidizing agent solution to the chemical plating waste liquor in the feed line 6.

In the illustrated embodiment, the chemical plating waste liquor is circulated, but where the anodic oxidation occurs with a high efficiency, the chemical plating waste liquor may be subjected to single pass treatment.

The electrolytic treatment of a chemical plating waste liquor according to the present invention is described in more detail by reference to the following Examples and Comparative Examples.

### EXAMPLE 1

A conductive diamond layer was formed at a doping amount of born of 500 ppm on a conductive silicon substrate having a thickness of 1 mm by the hot filament-assisted CVD process using ethyl alcohol as a carbon source, to prepare an anode having an electrode area of 1 cm². A stainless steel plate having an electrode area of 1 cm² was used as a cathode.

Using the thus prepared anode and cathode, a non-diaphragm electrolytic cell having a distance between the electrodes of 5 cm and having a volume of 100 ml as shown in the Figure was assembled.

A mixed solution of 0.5 mole/l of disodium hydrogenphosphite, 0.5 mole/l of hypophosphorous acid, and 0.06 mole/l of sodium citrate was prepared and stored as a test solution in a storage tank.

This test solution was circulated between the electrolytic cell and the storage tank at a flow rate of 1 liter/min using the circulating pump and subjected to oxidation of hypophosphorous acid and phosphorous acid and oxidative decomposition of citric acid at a liquid temperature of 35°C using a constant current having a current density of 15 A/dm² in the electrolytic cell.

The test solution before and after feeding into the electrolytic cell was analyzed by the ionic chromatography (column: IC-ANION-SW, manufactured by Tosoh Corporation, eluting solution: citric acid solution of 5 mmoles, electric conductivity detector: IC-8010, manufactured by Tosoh Corporation), thereby calculating a yield of orthophosphoric acid. With respect to the decomposition characteristic of citric acid, COD (Mn) was measured at 100°C by oxygen demand with potassium permanganate according to JIS K-0102.

At an electric current amount of 163 Ahr/l, hypophosphorous acid and phosphorus acid was a detection limit or less, and at that time, the yield of orthophosphoric acid was 100%. The initial COD (Mn) of 26,000 ppm was reduced to 13 ppm at an electric current amount of 163 Ahr/l.

### COMPARATIVE EXAMPLE 1

A chemical plating waste liquor was subjected to electrolytic treatment in the same manner as in Example 1, except for using a platinum-plated titanium electrode as the anode. At an electric current amount of 163 Ahr/l, the yield of orthophosphoric acid was 4%. Hypophosphorous acid was less than a detection limit, but a large amount of phosphorous acid remained. Further, COD (Mn) after the electrolytic treatment was 18,000 ppm.

### COMPARATIVE EXAMPLE 2

A chemical plating waste liquor was subjected to electrolytic treatment in the same manner as in Example 1, except for using a lead dioxide electrode as the anode. At an electric current amount of 163 Ahr/l, the yield of orthophosphoric acid was 85%. Hypophosphorous acid was less than a detection limit, but phosphorous acid remained. Further, COD (Mn) after the electrolytic treatment was 1,200 ppm.

### EXAMPLE 2

The electrolytic treatment was carried out under the same conditions as in Example 1, except for adding 20 g/l of sodium hydrogensulfate to the test solution. At an electric current amount of 146 Ahr/l, hypophosphorous acid and phosphorus acid was less than a detection limit, and at that time, the yield of orthophosphoric acid was 100%. Further, COD (Mn) after the electrolytic treatment was 8 ppm.

### COMPARATIVE EXAMPLE 3

The electrolytic treatment was carried out under the same conditions as in Example 2, except for using a platinum-plated titanium electrode in place of the conductive diamond electrode. At an electric current amount of 146 Ahr/l, the yield of orthophosphoric acid was 3%, and COD (Mn) was 20,200 ppm.

### COMPARATIVE EXAMPLE 4

The electrolytic treatment was carried out under the same conditions as in Example 2 and Comparative Example 3, except for using a lead dioxide electrode in place of the conductive diamond electrode. At an electric current amount of 146 Ahr/l, the yield of orthophosphoric acid was 77%. COD (Mn) after the electrolytic treatment was 1,300 ppm.

These results reveal that in Examples 1 and 2, by using the conductive diamond electrode as the anode, hypophosphorous acid and phosphorous acid can be oxidized into orthophosphoric acid in a yield of 100% and that at the same time, the organic compounds can be reduced to a level at which the chemical plating waste liquor can be discharged into rivers.

## Claims

1. A method for electrolytically treating a chemical plating waste liquor containing hypophosphorous acid, phosphorous acid and organic compounds contained in an electrolytic cell, which comprises using at least a conductive diamond electrode as an anode and applying an electric current to the conductive diamond electrode,
**characterized by**
simultaneously performing electrolytic oxidation of hypophosphorous acid and phosphorous acid into orthophosphoric acid and oxidative decomposition of the organic compounds in such a manner that the current density at the anode is 5-20 A/dm²; the liquid temperature is from the ambient temperature to 80 °C; and the pH of the waste liquor is 3-10.

2. The method as claimed in claim 1, wherein an oxidizing agent is added to the chemical plating waste liquor.

## Patentansprüche

1. Verfahren zum elektrolytischen Behandeln eines Abwassers von chemischem Plattieren, das hypophosphorige Säure, Phosphorsäure und organische Verbindungen enthält, die in einer elektrolytischen Zelle enthalten sind, wobei es Verwenden wenigstens einer leitenden Diamantelektrode als eine Anode und Anlegen eines elektrischen Stroms an die leitende Diamantelektrode umfasst,
**gekennzeichnet durch**
simultanes Durchführen elektrolytischer Oxidation von hypophosphoriger Säure und Phosphorsäure zu Orthophosphorsäure und oxidativer Zersetzung der organischen Verbindungen, so dass die Stromdichte an der Anode 5-20 A/dm² beträgt, die Flüssigkeitstemperatur von der Umgebungstemperatur bis 80 °C reicht und der pH-Wert des Abwassers 3-10 beträgt.

2. Verfahren nach Anspruch 1, wobei dem Abwasser von chemischem Plattieren ein Oxidationsmittel zugesetzt wird.

## Revendications

1. Procédé de traitement électrolytique d'une liqueur usée de dépôt électrolytique chimique contenant de l'acide hypophosphoreux, de l'acide phosphoreux et des composés organiques contenus dans une cellulose électrolytique, lequel comprend l'utilisation d'au moins une électrode en diamant conductrice comme anode et l'application d'un courant électrique à l'électrode en diamant conductrice,
**caractérisé par**
la réalisation simultanée d'une oxydation électrolytique d'acide hypophosphoreux et d'acide phosphoreux en acide orthophosphorique et d'une décomposition oxydante des composés organiques de telle sorte que la densité de courant à l'anode est de 5-20 A/dm² ; la température de liquide est comprise entre la température ambiante et 80°C ; et le pH de la liqueur usée est de 3-10.

2. Procédé selon la revendication 1, dans lequel on ajoute un agent oxydant à la liqueur usée de dépôt électrolytique chimique.
